**Europäisches Patentamt**

**European Patent Office**

**Office européen des brevets**

(19)

(11) Veröffentlichungsnummer: **0 164 578 B1**

(12)

# EUROPÄISCHE PATENTSCHRIFT

(45) Veröffentlichungstag der Patentschrift: **29.04.92**

(51) Int. Cl.⁵: **G06F 15/40**, G06F 12/02

(21) Anmeldenummer: **85105704.2**

(22) Anmeldetag: **09.05.85**

(54) **Verfahren zur Speicherung von zu Gruppen zusammengefassten vermittlungstechnischen Daten.**

(30) Priorität: **16.05.84 DE 3418212**

(43) Veröffentlichungstag der Anmeldung:
**18.12.85 Patentblatt 85/51**

(45) Bekanntmachung des Hinweises auf die
Patenterteilung:
**29.04.92 Patentblatt 92/18**

(84) Benannte Vertragsstaaten:
**AT CH DE IT LI NL SE**

(56) Entgegenhaltungen:
**EP-A- 0 003 744**

**PATENT ABSTRACTS OF JAPAN, Band 7, Nr.
2 (P-166)[1147], 7. Januar 1983;& JP-A-57 162
053**

**PER BRINCH HANSEN: "Operating System
Principles", Prentice-Hall, London, GB, 1973,
Seiten 169-173,300**

(73) Patentinhaber: **SIEMENS AKTIENGESELL-
SCHAFT**
**Wittelsbacherplatz 2**
**W-8000 München 2(DE)**

(72) Erfinder: **Holocher, Gustav**
**Theodor-Storm-Strasse 12**
**W-6440 Bebra(DE)**
Erfinder: **Torggler, Norbert, Dipl.-Ing.**
**Bellinzonastrasse 7**
**W-8000 München 71(DE)**

**EP 0 164 578 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(-/2.17/2.0)

# Beschreibung

Die Erfindung betrifft ein Verfahren zur Speicherung von zu Gruppen zusammengefaßten vermittlungstechnischen Daten in einem zumindest eine einer Anzahl von Gruppen entsprechende Anzahl von adressierbaren Speicherbereichen aufweisenden Datenspeicher einer Fernmeldevermittlungsanlage, insbesondere einer Fernschreib- und Datenvermittlungsanlage, die auch über einer mit dem Datenspeicher verbundenen, ebenfalls zur Aufnahme von zu Gruppen zusammengefaßten vermittlungstechnischer Daten geeigneten Zusatzspeicher verfügt.

Für den Betrieb von programmgesteuerten Vermittlungsanlagen werden die verschiedensten vermittlungstechnischen Daten, wie z.B. die mit der jeweiligen Vermittlungsanlage verbundenen Leitungen beschreibende Daten, Daten für die Freiwahl, teilnehmerbeschreibende Daten usw., benötigt. Diese Daten werden im allgemeinen bei der Inbetriebnahme der jeweiligen Vermittlungsanlage generiert und in für diese Daten vorgesehenen Datenspeichern gespeichert. Es tritt nun häufig der Fall ein, daß während des Betriebes einer Vermittlungsanlage bestimmten Gruppen von vermittlungstechnischen Daten weitere Daten hinzuzufügen sind. Unter einer Gruppe mögen dabei beispielsweise sämtliche, eine bestimmte Leitung beschreibenden oder einen bestimmten Teilnehmer beschreibenden Daten verstanden werden. Unter Berücksichtigung einer später gegebenenfalls erforderlichen Ergänzung der zu einer Gruppe gehörenden Daten wäre es beispielsweise möglich, den für jede der Gruppen von vermittlungstechnischen Daten erforderlichen Speicherbereich bei der Inbetriebnahme so zu bemessen, daß eine bestimmte Anzahl von zunächst nicht belegten Reservespeicherplätzen vorgesehen wird. Eine solche Vorgehensweise hätte jedoch den Nachteil, daß für jede der Gruppen eine entsprechende Anzahl von Speicherplätzen zu reservieren ist, was gegebenenfalls zu einem nicht erwünschten Speicherplatzbedarf führen würde.

Ein weitere Möglichkeit für die Belegung eines für eine Speicherung von vermittlungstechnischen Daten vorgesehenen Datenspeichers bestünde darin, die Speicherbereiche bei der Inbetriebnahme der Vermittlungsanlage so festzulegen, daß in ihnen jeweils lediglich eine der Anzahl der zu der jeweiligen Gruppe gehörenden Daten entsprechende Anzahl von Speicherplätzen vorgesehen ist. Zusätzlich in eine der Gruppen aufzunehmende Daten könnten in einen Zusatzspeicher eingetragen werden. Die bei einer solchen Erweiterung dann zu einer Gruppe gehörenden Daten in dem Datenspeicher und in dem Zusatzspeicher müssen dann adressenmäßig gekettet sein, d.h. die Anfangsadresse des von der jeweiligen Gruppe belegten Speicherbereiches des Zusatzspeichers muß in dem zugehörigen Speicherbereich des Datenspeichers hinterlegt sein. Diese Art der Speicherung hätte nun zwar den Vorteil, daß für eine gegebenenfalls erforderliche Erweiterung der Gruppen von vermittlungstechnischen Daten ein geringerer Speicherplatzbedarf erforderlich ist. Die adressenmäßige Verkettung der von einer Gruppe belegten Speicherbereiche bringt jedoch den Nachteil einer verhältnismäßig aufwendigen Adressenverwaltung mit sich.

Es ist nun Aufgabe der vorliegenden Erfindung, einen Weg zu zeigen, wie gegebenenfalls erweiterbare Gruppen von vermittlungstechnischen Daten mit einem geringen Speicherplatzbedarf und mit einem geringen Aufwand für die Adressenverwaltung gespeichert werden können.

Gelöst wird die vorstehend aufgezeigte Aufgabe bei einem Verfahren der eingangs genannten Art erfindungsgemäß dadurch, daß die zu Gruppen zusammengefaßten Daten jeweils in einem ihnen für die Datenspeicherung zugeteilten, lediglich eine der Anzahl der zu einer solchen Gruppe gehörenden Daten entsprechende Anzahl von Speicherplätzen aufweisenden Speicherbereich derart gespeichert werden, daß die einzelnen Speicherbereiche in dem Datenspeicher von einem als ersten Speicherbereich festgelegten Speicherbereich ausgehend lückenlos aufeinanderfolgend belegt werden, daß bei Auftreten von zusätzlich in eine der betreffenden Gruppen aufzunehmenden Daten der betreffenden vergrößerten Gruppe nunmehr in dem hinsichtlich der Adressierung seiner Speicherplätze sich an die Adressierung der Speicherplätze des Datenspeichers anschließenden Zusatzspeicher ein für die Aufnahme von Daten zur Verfügung stehender Speicherbereich zugeteilt wird, welcher eine der Anzahl der nunmehr zu der betreffenden vergrößerten Gruppe gehörenden Daten entsprechende Anzahl von Speicherplätzen aufweist und daß in diesen Speicherbereich des Zusatzspeichers die zu der betreffenden Gruppe gehörenden, in dem Datenspeicher bereits gespeicherten Daten und die zu dieser Gruppe hinzukommenden Daten gemeinsam übernommen werden.

Die Erfindung bringt den Vorteil mit sich, daß durch die Festlegung der Speicherbereiche des Datenspeichers zunächst keine den Speicherplatzbedarf erhöhende Reservespeicherplätze vorhanden sind. Für eine Erweiterung der Gruppen von vermittlungstechnischen Daten steht der Zusatzspeicher zur Verfügung. Da bei einer solchen Erweiterung sowohl die bereits für die jeweilige Gruppe in dem Datenspeicher gespeicherten Daten als auch die zusätzlich hinzukommenden Daten gemeinsam in den Zusatzspeicher übernommen werden, entfällt die bei einer Kettung getrennter Speicherbereiche erforderliche Adressenverwaltung.

Vorteilhafte Ausgestaltungen der Erfindung ergeben sich aus den Unteransprüchen.

Anhand einer Zeichnung wird die Erfindung nachstehend beispielsweise näher erläutert.

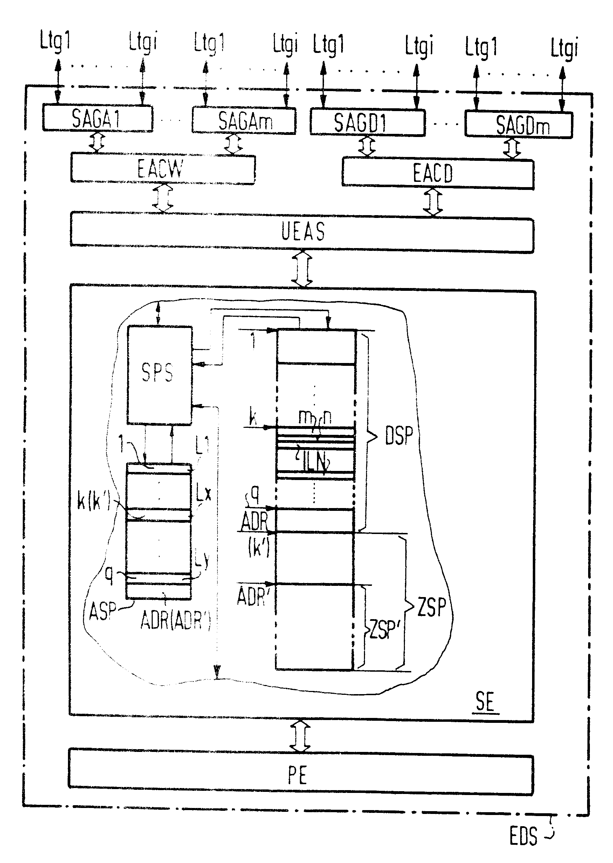

In der Zeichnung ist ausschnittweise eine Fernschreib- und Datenvermittlungsanlage EDS dargestllt. Von dieser Fernschreib- und Datenvermittlungsanlage sind lediglich zu einer Gruppe von Leitungsanschlußschaltungen gehörende Leitungsanschlußschaltungen SAGA1 bis SAGAm, zu einer zweiten Gruppe von Leitungsanschlußschaltungen gehörende Leitungsanschlußschaltungen SAGD1 bis SAGDm, den einzelnen Gruppen von Leitungsanschlußschaltungen zugehörige Eingabe-/Ausgabe-CodewandlerEACW bzw. EACD, eine Übertragungsablaufsteuerung UEAS, eine Speichereinheit SE und eine Programmsteuereinheit PE angedeutet. Die mit dem Eingabe-/Ausgabe-Codewandler EACW verbundenen Leitungsanschlußschaltungen dienen dazu, digitale Datensignale polaritätswechselweise zu verarbeiten. Die mit dem anderen Eingabe-/Ausgabe-Codewandler EACD verbundenen Leitungsanschlußschaltungen dienen zur Verarbeitung von sogenannten Bitgruppen. Diese Bitgruppen sind jewels eine Mehrzahl von Bits, beispielsweise 8 Bits, umfassende digitale Datensignale, die auch als Envelopes bezeichnet werden. Die Aufgabe dieser Eingabe-/Ausgabe-Codewandler besteht unter anderem darin, über die einzelnen Anschlußschaltungen zugeführte Signale zu dem eigentlichen Verarbeitungsteil der Fernschreib- und Datenvermittlungsanlage EDS weiterzuleiten bzw. von diesem Verarbeitungsteil her über die Leitungsanschlußschaltungen abzugebende Signale weiterzuleiten. Die Eingabe-/Ausgabe-Codewandler sind hierzu mit der Übertragungsablaufsteuerung UEAS verbunden. Diese Übertragungsablaufsteuerung steuert den Signalaustausch zwischen den Eingabe-/Ausgabe-Codewandlern und der Speichereinheit SE, die die ihr von der Übertragungsablaufsteuerung zugeführten Signale an die Programmsteuereinheit PE weiterleitet. Außerdem gibt die Speichereinheit SE die ihr von der Programmsteuereinheit zugeführten Signale an die Übertragungsablaufsteuerung UEAS ab.

Die in der Zeichnung angedeuteten Leitungsanschlußschaltungen sind jeweils mit einer Mehrzahl von Leitungsabschnitten Ltg1 bis Ltgi verbunden. Bei den mit den Leitungsanschlußgruppen SAGA1 bis SAGAm verbundenen Leitungsabschnitten handelt es sich dabei um Leitungsabschnitte, auf denen digitale Datensignale nach einem asynchronen Übertragungsverfahren übertragen werden. Auf den mit den übrigen Leitungsanschlußschaltungen SAGD1 bis SAGDm verbundenen Leitungsabschnitten erfolgt dagegen eine Übertragung von digitalen Datensignalen nach einem synchronen Übertragungsverfahren. Bei den genannten Leitungsabschnitten möge es sich dabei entweder um die hier dargestellte Fernschreib- und Datenvermittlungsanlage mit einer weiteren Fernschreib- und Datenvermittlungsanlage verbindende Verbindungsleitungen oder um Teilnehmeranschlußleitungen handeln, die die Fernschreib- und Datenvermittlungsanlage mit Teilnehmerendeinrichtungen verbindet.

Von der genannten Speichereinheit SE ist in der Zeichnung nur der Schaltungsteil dargestellt, der zur Speicherung von zu Gruppen zusammengefaßten vermittlungstechnischen Daten dient. Dieser Schaltungsteil weist eine Speichersteuerung SPS auf, die für einen Signalaustausch mit der Übertragungsablaufsteuerung UEAS und mit der Programmsteuereinheit PE verbunden ist. Außerdem steht diese Speichersteuerung mit einem ersten, als Adressenspeicher dienenden Speicher ASP und mit einem zweiten, aus einem Datenspeicher DSP und einem Datenspeicher ZSP mit freigehaltenen Speicherplätzen, der im folgenden als Zusatzspeicher bezeichnet wird, bestehenden Speicher in Verbindung. Hinsichtlich der Adressierung seiner Speicherplätze schließt sich der Zusatzspeicher an die Adressierung der Speicherplätze des Datenspeichers lückenlos an. Der Datenspeicher und der Zusatzspeicher weisen jeweils eine Vielzahl von Speicherplätzen auf, die zur Aufnahme von zu Gruppen zusammengefaßten vermittlungstechnischen Daten dienen. Bei den Gruppen von vermittlungstechnischen Daten handelt es sich bei dem hier erläuterten Ausführungsbeispiel um Leitungsbündellisten, die im Zuge eines Verbindungsaufbaues zwischen mit der Fernschreib- und Datenvermittlungsanlage verbundenen Leitungsabschnitten für die Freiwahl, d.h. für die Auswahl einer zu einem bestimmten Ziel führenden freien Leitung, erforderlich sind. Ein solches Ziel kann beispielsweise eine weitere Fernschreib- und Datenvermittlungsanlage sein.

In den Leitungsbündellisten sind jeweils die zu einem Leitungsbündel gehörenden, mit der Fernschreib-und Datenvermittlungsanlage EDS verbundenen Leitungsabschnitte angegeben. Hierzu sind diesen Leitungsabschnitten innerhalb der Fernschreib- und Datenvermittlungsanlage interne Leitungsnummern zugeteilt. Für die Speicherung dieser Leitungsbündellisten werden, wie im folgenden noch erläutert werden wird, in dem Datenspeicher DSP und gegebenenfalls in dem Zusatzspeicher ZSP Speicherbereiche belegt. Die Anzahl der zu einem Speicherbereich gehörenden Speicherplätze richtet sich dabei nach der Anzahl der in diesem Speicherbereich abzuspeichernden internen Leitungsnummern, d.h. die einzelnen Speicherbereiche weisen keine konstante Anzahl von Speicherplätzen auf. Jede der Leitungsbündellisten enthält neben einer bestimmten Anzahl von internen Leitungsnummern unter anderem noch Angaben bezüglich der Anzahl der zu dem zugeteilten Speicherbereich gehörenden Speicherplätze sowie Angaben bezüglich der Anzahl der davon belegten Speicherplätze.

Die Generierung und die anschließende Speicherung der Leitungsbündellisten erfolgt im allgemeinen bei der Inbetriebnahme der Fernschreib- und Datenvermittlungsanlage EDS. Der Datenspeicher DSP und der Zusatzspeicher ZSP werden dabei in folgender Weise belegt. Die Speichersteuerung SPS erhält zunächst von der Programmsteuereinheit PE die generierten Leitungsbündellisten nacheinander zugeführt. Die Speichersteuerung SPS überträgt daraufhin der Reihe nach die ihr zugeführten Leitungsbündellisten in den noch freien Datenspeicher DSP, und zwar beginnend bei der Adresse "1". Wie bereits erwähnt, werden dafür je nach der Anzahl der zu einer Leitungsbündelliste gehörenden internen Leitungsnummern von der Anzahl der Speicherplätze her unterschiedliche Speicherbereiche belegt. Diese Speicherbereiche folgen in dem Datenspeicher DSP einander lückenlos. Die Anfangsadressen dieser den Leitungsbündellisten zugeteilten Speicherbereiche werden jeweils in einen der jeweiligen Leitungsbündelliste für die Aufnahme einer solchen Anfangsadresse zugeteilten Speicherplatz des bereits erwähnten Adressenspeichers ASP eingetragen. Für den ersten Speicherbereich, der der Leitungsbündelliste L1 zugeteilt sein möge, ergibt sich die Anfangsadresse "1", die, wie in der Zeichnung dargestellt, in einem der Leitungsbündelliste L1 zugeteilten Speicherplatz des Adressenspeichers ASP eingetragen ist. Die Anfangsadresse eines dem ersten Speicherbereich nachfolgenden Speicherbereiches ergibt sich aus der um einen Betrag $n+2$ erhöhten Anfangsadresse des diesem Speicherbereich unmittelbar vorangehenden Speicherbereiches. Der Betrag $n$ gibt dabei die Anzahl der zu diesem vorangehenden Speicherbereich gehörenden Speicherplätze an. Wie bereits erwähnt, sind Angaben bezüglich dieser Anzahl in den Leitungsbündellisten enthalten. In dem Adressenspeicher ASP sind die auf diese Weise ermittelten Anfangsadressen $k$ und $q$ der den Leitungsbündellisten Lx und Ly in dem Datenspeicher DSP zugeteilten Speicherbereiche eingetragen.

Für den der Leitungsbündelliste Lx zugeteilten Speicherbereich des Datenspeichers DSP, der bei der Anfangsadresse $k$ beginnt, ist die Belegung der Speicherplätze stellvertretend für sämtliche Speicherbereiche detaillierter dargestellt. In zwei Speicherplätzen sind zunächst unter anderem die Angaben bezüglich der Anzahl der zu dem Speicherbereich gehörenden Speicherplätze (in der Zeichnung mit $n$ bezeichnet) und die Angaben bezüglich der davon belegten Speicherplätze (mit $m$ bezeichnet) enthalten. Diese Angaben werden bei der Generierung der Leitungsbündellisten erstellt. Dabei sind zunächst die beiden genannten Angaben identisch, d.h. $n = m$. An die genannten zwei Speicherplätze schließen sich dann diejenigen $n$ Speicherplätze an, in denen die zu der Leitungsbündelliste gehörenden, durch interne Leitungsnummern ILN bezeichneten Leitungsabschnitte angegeben sind.

In der Zeichnung ist noch am Ende des Adressenspeichers ASP eine Adresse ADR angegeben. Diese Adresse gibt den ersten nicht mehr durch Leitungsbündellisten belegten Speicherplatz an. Sie stellt gleichzeitig die Anfangsadresse des zunächst nicht belegten Zusatzspeichers ZSP dar.

Sind nun während des Betriebes der Fernschreib- und Datenvermittlungsanlage EDS Änderungen in Leitungsbündellisten erforderlich, wird in folgender Weise verfahren. Ist aus einer Leitungsbündelliste eine interne Leitungsnummer zu entfernen, so wird diese durch die Speichersteuerung SPS in dem zugehörigen Speicherbereich des Datenspeichers DSP gelöscht. Gleichzeitig wird der Betrag $m$, der ja die Anzahl der in dem betreffenden Speicherbereich belegten Speicherplätze angibt, aktualisiert, d.h. für den hier betrachteten Fall wird $m-1$ eingetragen. Sind dagegen eine oder mehrere interne Leitungsnummern zusätzlich in eine der Leitungsbündellisten aufzunehmen, so prüft die Speichersteuerung zunächst anhand der in dem zugehörigen Speicherbereich gespeicherten Angaben $m$, $n$, ob eine entsprechende Anzahl von Speicherplätzen in dem betreffenden Speicherbereich nicht belegt ist. Ist dies der Fall, so wird die in die Leitungsbündelliste aufzunehmende Anzahl von internen Leitungsnummern in den Speicherbereich übernommen. Gleichzeitig werden die Angaben $m$ aktualisiert.

Ist dagegen für eine Erweiterung der betreffenden Leitungsbündelliste eine entsprechende Anzahl freier Speicherplätze in dem betreffenden Speicherbereich nicht vorhanden, wie es beispielsweise bei der Leitungsbündelliste Lx der Fall sein möge, so wird für diese Leitungsbündelliste nunmehr von der Speichersteuerung SPS her in dem Zusatzspeicher ZSP ein bisher nicht belegter Speicherbereich belegt, in den unter Steuerung durch die Speichersteuerung SPS die bisher in dem Datenspeicher DSP eingetragene Leitungsbündelliste und die zusätzlich hinzukommenden internen Leitungsnummern eingeschrieben werden. Die Angaben $m$, $n$ werden dabei vor dem Einschreiben entsprechend geändert. Nach dieser Änderung ist wieder $m = n$. Der nunmehr in dem Zusatzspeicher ZSP für die Leitungsbündelliste Lx belegte Speicherbereich möge, wie in der Zeichnung angegeben, bei der Adresse $\hat{k}$ beginnen. Diese Adresse entspricht der Anfangsadresse ADR des noch freien Zusatzspeichers, die die Speichersteuerung SPS für die Übertragung der Datensignale in den Zusatzspeicher dem Adressenspeicher ASP entnimmt. Die neue Anfangsadresse k̂ des der Leitungsbündelliste Lx zugeteilten Speicherbereiches wird von der Speichersteuerung anschließend in die in Frage kommende Speicherzelle des Adressenspeichers ASP eingetragen. Außerdem ermittelt die Speichersteuerung anhand der Anzahl der von der nunmehr erweiterten Leitungsbündelliste belegten Speicherplätze die Anfangsadresse des jetzt hinsichtlich der Anzahl seiner Speicherplätze verkleinerten Zusatzspeichers ZSP' und trägt diese in den Adressenspeicher ASP ein. Diese Anfangsadresse ist in der Zeichnung mit ADR ` bezeichnet. Der bisher von der Leitungsbündelliste Lx in dem Datenspeicher DSP belegte Speicherbereich mit der Anfangsadresse k wird als nicht belegt gekennzeichnet. Dies kann beispielsweise dadurch erfolgen, daß ein entsprechender Eintrag in den durch die Adresse k bezeichneten Speicherplatz vorgenommen wird.

Der gerade dargestellte Vorgang wiederholt sich, sobald eine weitere Leitungsbündelliste zu erweitern ist und für diese Erweiterung keine freien Speicherplätze in dem bereits für diese Leitungsbündelliste belegten Speicherbereich des Datenspeichers DSP zur Verfügung stehen.

Bei Ausschöpfung der Speicherkapazität des Zusatzspeichers ZSP durch Belegen der in diesem für eine Speicherung von Leitungsbündellisten zur Verfügung stehenden Speicherplätze werden der Datenspeicher DSP und der Zusatzspeicher ZSP hinsichtlich der Belegung ihrer Speicherplätze reorganisiert. Für diese Reorganisation sucht die Speichersteuerung SPS zunächst den Datenspeicher DSP beginnend bei der Adresse "1" auf das Vorhandensein nicht belegter Speicherbereiche ab. Wird dabei ein solcher nicht belegter Speicherbereich ermittelt, so wird dessen Anfangsadresse die neue Anfangsadresse des diesem nicht belegten Speicherbereich nachfolgenden belegten Speicherbereiches. Die in diesem belegten Speicherbereich gespeicherte Leitungsbündelliste wird anschließend unter Steuerung durch die Speichersteuerung in den durch die neue Anfangsadresse bezeichneten Speicherbereich übertragen. Danach wird der bisher belegte Speicherbereich als nicht belegt gekennzeichnet. Ist dies erfolgt, so wird die Suche nach nicht belegten Speicherbereichen zunächst in dem Datenspeicher DSP und anschliessend in dem Zusatzspeicher ZSP fortgesetzt. Dabei werden gegebenenfalls in der gerade erläuterten Weise Leitungsbündellisten in neu zugeteilte Speicherbereiche übertragen. Dies erfolgt nun so lange, bis die in dem Datenspeicher und in dem Zusatzspeicher durch Leitungsbündellisten belegten Speicherbereiche hinsichtlich ihrer Adressierung wieder lückenlos aufeinanderfolgen. Es stehen dann wieder ein vollständig belegter Datenspeicher und ein nunmehr bezüglich der Anzahl der Speicherplätze veränderter, hinsichtlich seiner Adressierung sich an die Adressierung des Datenspeichers lückenlos anschliessender Zusatzspeicher für gegebenenfalls durchzuführende Erweiterungen bestehender Leitungsbündellisten zur Verfügung.

Bezüglich der Übertragung einer Leitungsbündelliste von einem Speicherbereich in einen anderen Speicherbereich sei hier noch darauf hingewiesen, daß die Speichersteuerung SPS während der Übertragung einen Zugriff auf die betreffende Leitungsbündelliste durch vermittlungstechnische Steuerungsvorgänge, beispielsweise durch Steuerungsvorgänge zur Durchführung der Freiwahl, verhindert.

Die vorstehend erläuterte Reorganisation kann entweder manuell, d.h. durch Bedienpersonal der Fernschreib- und Datenvermittlungsanlage EDS oder automatisch bei Unterrschreiten einer bestimmten Anzahl freier Speicherplätze in dem Zusatzspeicher ZSP angestoßen werden. Durch einen manuellen Anstoß zur Reorganisation ist es beispielsweise möglich, eine Reorganisation in einer verkehrsarmen Zeit, d.h. in einer Zeit, in der die Fernschreib- und Datenvermittlungsanlage nicht voll ausgelastet ist, durchzuführen, um in der verkehrsreichen Zeit eine Behinderung durch eine Reorganisation der Leitungsbündellisten zu vermeiden.

Vorstehend wurde die Erfindung am Beispiel der Speicherung von Leitungsbündellisten einer Fernschreib- und Datenvermittlungsanlage erläutert. Es dürfte jedoch einzusehen sein, daß die Erfindung nicht nur zur Speicherung derartiger Daten geeignet ist. Vielmehr lassen sich nach dem hier erläuterten Verfahren beliebige zu Gruppen zusammengefaßte vermittlungstechnische Daten, insbesondere aber Angaben über geschlossene Betriebsklassen, die einem oder mehreren Teilnehmern zugeordnet sind, vorteilhaft speichern.

**Patentansprüche**

1. Verfahren zur Speicherung von zu Gruppen zusammengefaßten vermittlungstechnischen Daten in einem zumindest eine einer Anzahl von Gruppen entsprechende Anzahl von adressierbaren Speicherbereichen aufweisenden Datenspeicher (DSP) einer Fernmeldevermittlungsanlage (EDS), insbesondere einer Fernschreib- und Datenvermittlungsanlage, die auch über einen mit dem Datenspeicher verbundenen, ebenfalls zur Aufnahme von zu Gruppen zusammengefaßten vermittlungstechnischen Daten geeigneten Zusatzspeicher (ZSP) verfügt, **dadurch gekennzeichnet,** daß die zu Gruppen zusammengefaßten Daten jeweils in einem ihnen für die Datenspeicherung zugeteilten, lediglich eine der Anzahl der zu einer solchen Gruppe gehörenden Daten entsprechende Anzahl von Speicherplätzen aufweisenden Speicherbereich derart gespeichert werden, daß die einzelnen Speicherbereiche in dem Datenspeicher von einem als ersten Speicherbereich festgelegten Speicherbereich ausgehend lückenlos aufeinanderfolgend belegt werden,

daß bei Auftreten von zusätzlich in eine der betreffenden Gruppen aufzunehmenden Daten der betreffenden vergrößerten Gruppe nunmehr in dem hinsichtlich der Adressierung seiner Speicherplätze sich an die Adressierung der Speicherplätze des Datenspeichers anschließenden Zusatzspeicher ein für die Aufnahme von Daten zur Verfügung stehender Speicherbereich zugeteilt wird, welcher eine der Anzahl der nunmehr zu der betreffenden vergrößerten Gruppe gehörenden Daten entsprechende Anzahl von Speicherplätzen aufweist,

und daß in diesen Speicherbereich des Zusatzspeichers die zu der betreffenden Gruppe gehörenden, in dem Datenspeicher bereits gespeicherten Daten und die zu dieser Gruppe hinzukommenden Daten gemeinsam übernommen werden.

2. Verfahren nach Anspruch 1, **dadurch gekennzeichnet,** daß bei Ausschöpfung der Speicherkapazität des Zusatzspeichers (ZSP) durch Belegen der in diesem zur Verfügung stehenden Speicherplätze der Datenspeicher (DSP) und der Zusatzspeicher (ZSP) hinsichtlich der Belegung ihrer Speicherplätze derart reorganisiert werden, daß sämtliche, mit vermittlungstechnischen Daten belegten Speicherbereiche unmittelbar aufeinanderfolgend von dem ersten Speicherbereich des Datenspeichers ausgehend lediglich in diesem und gegebenenfalls in einem Teil der bisher als Zusatzspeicher benutzten Zusatzspeicherplätze abgespeichert werden.

3. Verfahren nach Anspruch 2, **dadurch gekennzeichnet**, daß die Reorganisation des Datenspeichers (DSP) und des Zusatzspeichers (ZSP) manuell angestoßen werden kann.

4. Verfahren nach einem der Ansprüche 1 bis 3, **dadurch** gekennzeichnet, daß als Gruppen von vermittlungstechnischen Daten jeweils Angaben bezüglich der zu einem Leitungsbündel gehörenden, mit der Vermittlungsanlage (EDS) verbundenen Leitungsabschnitte verwendet werden.

5. Verfahren nach einem der Ansprüche 1 bis 3, **dadurch gekennzeichnet,** daß als Gruppen von vermittlungstechnischen Daten jeweils Angaben über geschlossene Betriebsklassen von mit der Vermittlungsanlage (EDS) verbundenen Teilnehmerendeinrichtungen verwendet werden.

**Claims**

1. Method for storing switching data combined to form groups in a data memory (DSP) of a telecommunications system (EDS), preferably of a telex and data switching system, having at least a number of addressable memory areas corresponding to a number of groups, which system also has an additional memory (ZSP) connected to the data memory, likewise for accommodating switching data combined to form groups, characterised in that the data combined to form groups is stored in each case in a memory area that is assigned to them for the data storage and has only a number of memory locations corresponding to the number of data belonging to such a group in such a way that the individual memory areas in the data memory are successively occupied without gaps starting from a memory area defined as first memory area, in that, upon the occurrence of data to be additionally accommodated in one of the respective groups, the respective enlarged group is now assigned a memory area available for accommodating data in the additional memory which follows on from the addressing of the memory locations of the data memory with respect to the addressing of its memory locations, which memory area has a number of memory locations corresponding to the number of data now belonging to the respective enlarged group, and in that, in this memory area of the additional memory, the data belonging to the respective group already stored in the data memory and the data added to this group are transferred together.

2. Method according to Claim 1, characterised in that, when the storage capacity of the additional memory (ZSP) is exhausted as a result of occupation of the memory locations available therein, the data memory (DSP) and the additional memory (ZSP) are reorganised with respect to the occupation of their memory locations in such a way that all memory areas occupied with switching data are stored directly in succession, starting from the first memory area of the data memory, only in the latter and if necessary in some of the additional memory locations hitherto used as additional memory.

3. Method according to claim 2, characterised in that the reorganisation of the data memory (DSP) and of the additional memory (ZSP) can be initiated manually.

4. Method according to one of Claims 1 to 3, characterised in that specifications relating to the line sections belonging to a line group and connected to the switching system (EDS) are used in each case as groups of switching data.

5. Method according to one of Claims 1 to 3, characterised in that specifications relating to closed user groups of subscriber terminals connected to the switching system (EDS) are used in each case as groups of switching data.

**Revendications**

1. Procédé pour mémoriser des données techniques de commutation réunies sous la forme de groupes dans une mémoire de données (DSP), qui possède au moins un nombre, correspondant au nombre de groupes, de zones de mémoire adressables, d'une installation de commutation de télécommunications (EDS), notamment d'une installation de téléimpression et de commutation de données, qui dispose également d'une mémoire supplémentaire (ZSP) raccordée à la mémoire de données et convenant également pour l'enregistrement de données techniques de commutation réunies sous la forme de groupes, caractérisé par le fait que les données réunies sous la forme de groupes sont mémorisées respectivement dans une zone de mémoire, qui leur est affectée pour la mémorisation des données et possède uniquement un nombre d'emplacements de mémoire, qui correspond au nombre des données associées à un tel groupe, de telle sorte que les différentes zones de la mémoire de données sont occupées successivement, sans discontinuité, à partir d'une zone de mémoire fixée en tant que première zone de mémoire, que lors de l'apparition de données, qui doivent être reçues en supplément dans l'un des groupes considérés, du groupe accru considéré, dans la mémoire supplémentaire dont l'adressage des emplacements de mémoire se raccorde à l'adressage des emplacements de la mémoire de données, est affectée une zone de mémoire, qui est disponible pour la réception de données et possède un nombre d'emplacements de mémoire, qui correspond au nombre des données qui appartiennent alors au groupe accru considéré, et que dans cette zone de la mémoire supplémentaire sont transférées en commun les données qui appartiennent au groupe considéré et qui sont déjà mémorisées dans la mémoire de données, et les données qui s'ajoutent à ce groupe.

2. Procédé suivant la revendication 1, caractérisé en ce que lorsque la capacité de la mémoire supplémentaire (ZSP) est épuisée en raison de l'occupation des emplacements disponibles dans cette mémoire, la mémoire de données (DSP) et la mémoire supplémentaire (ZSP) sont réorganisées en ce qui concerne les occupations de leurs emplacements de mémoire de telle sorte que toutes les zones de mémoire occupées par des données techniques de commutation sont mémorisées de façon directe successivement à partir de la première zone de la mémoire de données, uniquement dans cette dernière et éventuellement dans une partie des emplacements de la mémoire supplémentaire utilisée jusqu'alors en tant que mémoire supplémentaire.

3. Procédé suivant la revendication 2, caractérisé par le fait que la réorganisation de la mémoire de données (DSP) et de la mémoire supplémentaire (ZSP) peut être déclenchée manuellement.

4. Procédé suivant l'une des revendications 1 à 3, caractérisé par le fait qu'on utilise comme groupes de données techniques de commutation, respectivement des indications concernant les sections de conducteurs faisant partie d'un faisceau de conducteurs et raccordées à l'installation de commutation (EDS).

5. Procédé suivant l'une des revendications 1 à 3, caractérisé par le fait qu'on utilise, comme groupes de données techniques de commutation, respectivement des indications concernant des classes fermées de fonctionnement de terminaux d'abonnés raccordés à l'installation de commutation (EDS).